# EUROPÄISCHE PATENTSCHRIFT

(11) **EP 1 900 583 B1**
(45) Veröffentlichungstag und Bekanntmachung des Hinweises auf die Patenterteilung: **21.08.2013**
(21) Anmeldenummer: 07017945.2
(22) Anmeldetag: 13.09.2007
(51) Int. Cl.: B60T 7/10, G05G 1/04, B60T 15/04

(54) **Hebelvorrichtung für ein Handbremsventil einer Bremsanlage**
Lever device for a handbrake valve in a braking device
Dispositif à levier pour une soupape de frein à main d'une installation de frein

(30) Priorität: 14.09.2006 DE 102006043165
(43) Veröffentlichungstag der Anmeldung: 19.03.2008
(73) Patentinhaber: KNORR-BREMSE Systeme für Nutzfahrzeuge GmbH, 80809 München (DE)
(72) Erfinder: Vollmer, Otto, 80689 München (DE)
(74) Vertreter: Mattusch, Gundula

(56) Entgegenhaltungen:
- EP-A- 0 171 569
- DE-A1- 3 844 382
- GB-A- 2 171 495
- GB-A- 2 229 795
- JP-A- 59 197 460

## Beschreibung

Die Erfindung betrifft eine Hebelvorrichtung, insbesondere eine Hebelvorrichtung für ein Handbremsventil einer Bremsanlage, mit einem schwenkbaren Rastierelement, dessen Stellung durch eine Schwenkbewegung variierbar ist und das zumindest einen Einrastabschnitt, vorzugsweise einen Einrastvorsprung, aufweist, der zum Sperren der Schwenkbewegung vorgesehen ist.

Derartige Vorrichtungen sind beispielsweise aus den Druckschriften GB 2 171 495 A und EP 0 171 5691 schon bekannt.

Derartige Hebelvorrichtungen werden im Kraftfahrzeugbereich, insbesondere bei Nutzfahrzeugen, allgemein zur Betätigung von Handbremsventilen einer Kraftfahrzeugbremsanlage eingesetzt. In diesem Fall stehen die Handbremsventile mit der Bremsanlage zugeordneten Federspeicherzylindern in Verbindung. Die Handbremsventile dienen insbesondere dazu, eine Feststellbremse und/oder eine Hilfsbremse eines Nutzfahrzeuges über die Federspeicherzylinder zu betätigen. Beispielsweise auch bei Zugfahrzeugen, die mit einem Anhänger oder Auflieger verbunden sind, kann durch das Handbremsventil auch die Feststellbremse und/oder die Hilfsbremse des Anhängers oder Aufliegers betätigt werden. Die Betätigung des Handbremsventils durch die Hebelvorrichtung erfolgt dabei über einen mit einem Griff versehenen und um eine Schwenkachse schwenkbaren Hebel beziehungsweise Kipphebel, wobei der Griff üblicherweise bewegbar an dem Hebel geführt ist. Mittels dem an dem Hebel vorgesehen Griff ist die Betätigung des Handbremsventils und damit die Betätigung der Feststellbremse und/oder Hilfsbremse feinfühlig einstellbar beziehungsweise abstufbar. Beispielsweise lässt sich der schwenkbare Hebel mittels des Griffs von einer Grundstellung beziehungsweise Parkbremslösestellung, bei der die in Rede stehenden Bremsen nicht betätigt werden, in Richtung einer so genannten Parkbremsstellung schwenken, bei der die vorgenannten Bremsen nahezu maximal betätigt werden. Zur Stellungsfixierung des Hebels, beispielsweise in der Parkbremsstellung, ist ein bezüglich des Hebels bewegbares Rastierelement vorgesehen, das bei Erreichen der Parkbremsstellung die Stellungsfixierung beziehungsweise ein Sperren der Schwenkbewegung des Hebels bewirken kann. Das Rastierelement weist in der Regel zum Sperren der Schwenkbewegung zumindest einen Einrastabschnitt, vorzugsweise einen Einrastvorsprung, auf. Der Einrastabschnitt ist beispielsweise in eine Einrastöffnung einer Gleitbahn einrastbar, mit der das Rastierelement zumindest abschnittweise in Berührung steht. Zum Lösen der Stellungsfixierung beziehungsweise zum Entriegeln des Hebels ist das Rastierelement üblicherweise mit dem Griff unmittelbar gekoppelt und dadurch zusammen mit dem Griff in eine Lösestellung beziehungsweise Entriegelungsstellung bewegbar. Jedoch tritt bei den dem Stand der Technik angehörenden Hebelvorrichtungen beim Schwenkvorgang in die Parkbremsstellung zur Stellungsfixierung des Hebels der Fall auf, dass das Rastierelement die Stellung des Hebels zwar fixiert, aber ohne korrekt und damit sicher einzurasten. Dieser Fall tritt insbesondere dann auf, wenn die unmittelbare Kopplung zwischen dem Griff und dem Rastierelement sämtliche auf den Griff wirkende Drehmomente auf das Rastierelement überträgt. Die auf das Rastierelement übertragenen Drehmomente können derart verlaufen, dass das Rastierelement in eine nicht zur Stellungsfixierung geeignete Lage versetzt wird, den Hebel aber ohne einzurasten dennoch labil fixiert, beispielsweise durch Verkanten mit anderen Elementen. Auch bei Vorliegen einer Kopplung zwischen dem Griff und Rastierelement, bei der teilweise auf den Griff ausgeübte Drehmomente nicht auf das Rastierelement übertragen werden, kann ein Verkanten des Rastierelements auftreten. Insbesondere dann, wenn der Griff durch Beanspruchung derart verformt wird, dass er durch Verformung zumindest abschnittsweise mit dem Rastierelement in Berührung gelangt. Dadurch kann sich eine labile und unter Umständen eine sich selbsttätig lösende Hebelstellung ergeben. Somit kann beispielsweise ein Fahrer des Kraftfahrzeugs fälschlicher Weise zu der Auffassung gelangen, der Hebel sei in der Parkbremsstellung sicher fixiert. Jedoch kann die Verkantung des Rastierelements beziehungsweise des Einrastabschnitts durch Erschütterungen des Kraftfahrzeugs leicht wieder gelöst werden. Derartige Erschütterungen können beispielsweise durch Zuschlagen einer Fahrzeugtüre oder in sonstiger Weise hervorgerufen werden. Dadurch kann sich das Rastierelement beziehungsweise dessen Einrastabschnitt aus der Verkantung lösen, wodurch das Kraftfahrzeug beispielsweise auf einer Schräge wegzurollen beginnen kann.

Der Erfindung liegt daher die Aufgabe zugrunde, die gattungsgemäßen Hebelvorrichtungen derart weiterzubilden, dass eine Stellungsfixierung des Hebels durch korrektes Einrasten des Rastierelements unabhängig von der Beanspruchung des Griffs sicher gewährleistet werden kann.

Diese Aufgabe wird durch die Merkmale des unabhängigen Anspruchs gelöst.

Vorteilhafte Ausgestaltungen und Weiterbildungen der Erfindung ergeben sich aus den abhängigen Ansprüchen.

Die erfindungsgemäße Hebelvorrichtung baut auf dem gattungsgemäßen Stand der Technik dadurch auf, dass an dem zumindest einen Einrastabschnitt eine Fase vorgesehen ist. Diese Weiterbildung ist dahingehend von Vorteil, als beispielsweise ein über der Einrastöffnung befindlicher quaderförmiger Einrastabschnitt nicht mit dessen Kante an einer Einrastöffnungskante hängen bleiben, sondern über die Fase in die Einrastöffnung gleiten kann. Dadurch wird ein sicheres Sperren der Schwenkbewegung des Rastierelement beziehungsweise des Hebels erreicht. So kann sich beispielsweise der Einrastabschnitt, der vorzugsweise in der Form eines Rastzahns ausgebildet ist, von einer Grundstellung beziehungsweise Parkbremslösestellung des Hebels ausgehend bis zur Parkbremsstellung mit der Gleitbahn in Berührung befinden. Damit bei Erreichen der Einrastöffnung das Einrasten erleichtert wird, ist an dem Einrastabschnitt die Fase vorgesehen, über die der Einrastabschnitt über die Einrastöffnung einrasten kann.

Die erfindungsgemäße Hebelvorrichtung kann in vorteilhafter Weise derart weitergebildet sein, dass das Rastierelement weiterhin einen achsensymmetrischen Hauptkörper umfasst, an dem der zumindest eine Einrastabschnitt in einer Quaderform vorgesehen. Ebenso ist aber auch möglich, dass der Hauptkörper des Rastierelements neben der achsensymmetrischen Ausbildung zumindest abschnittsweise flächensymmetrisch ausgebildet sein. Insbesondere der quaderförmige Einrastabschnitt mit einer Fase, die vorzugsweise an der der Gleitbahn zugewandten Seite des Einrastabschnitts ausgebildet ist, ist von großem Nutzen. Damit wird zum einen ein Flächenkontakt beziehungsweise eine Flächenberührung zwischen dem Einrastabschnitt und der Gleitbahn hergestellt, beispielsweise die auf der Gleitbahn aufliegenden Quaderfläche. Dadurch wird der Verschleiß des Einrastabschnitts im Vergleich zu Einrastabschnitten mit Linienberührung mit der Gleitbahn niedrig gehalten. Zum anderen wird anhand der Fase ein sicheres Einrasten in die Einrastöffnung gewährleistet.

Weiterhin kann die erfindungsgemäße Hebelvorrichtung so verwirklicht werden, dass das Rastierelement einen weiteren Einrastabschnitt mit einer Fase umfasst, der an dem Hauptkörper vorgesehen ist, wobei die Einrastabschnitte bezüglich des Hauptkörpers achsensymmetrisch ausgebildet sind und/oder deren Quaderquerachse übereinstimmt. Anhand der Achsensymmetrie bezüglich der Rastierelementlängsachse des Rastierelements sind die Fasen gesehen in Richtung der Schwenkbewegung des Rastierelements versetzt angeordnet. So ist eine Fase an einem Einrastabschnitt bezüglich der Schwenkbewegung des Rastierelements stets eine vorauseilende Fase, die zuerst die Einrastöffnung der Gleitbahn erreicht. Hingegen ist die andere Fase des weiteren Einrastabschnitts eine nacheilende Fase, die nach der voreilenden Fase die Sperröffnung erreicht. Diese Ausbildung der erfindungsgemäßen Hebelvorrichtung ist besonders vorteilhaft. Ist nämlich die Fase an dem einen Einrastabschnitt an der vorauseilenden Seite des Einrastabschnitts bezüglich der Hebelschwenkrichtung vorgesehen, wohingegen die Fase an dem anderen Einrastabschnitt an der nacheilenden Fase bezüglich der Hebelschwenkrichtung vorgesehen ist, wird das Einrasten weiterhin erleichtert. Dadurch wird vermieden, dass sich der eine Einrastabschnitt bereits teilweise in der Einrastöffnung befindet, während der andere Einrastabschnitt beispielsweise noch mit einer Kante an der Gleitbahn fest hängt. Vorzugsweise stimmen die Quaderquerachsen der beiden Einrastabschnitte jedoch überein, so dass die zwei Einrastabschnitte gesehen in Richtung der Schwenkbewegung nicht gegeneinander versetzt sind.

Darüber hinaus kann die erfindungsgemäße Hebelvorrichtung so ausgebildet sein, dass zumindest die Einrastabschnitte aus (Torlon^{®})-Polyamidimid, insbesondere Torlon 4301 mit Graphit, oder Polyamid 6.6 ausgebildet sind. Derart ausgebildete Einrastabschnitte zeichnen sich vor allem durch deren vorteilhafte Werkstoffeigenschaften aus. So sind solche Einrastabschnitte formbeständiger beziehungsweise haben eine hohe Zähigkeit und mechanische Festigkeit und sind dadurch verschleißärmer als die bisher verwendeten Einrastabschnitte. Darüber hinaus weisen diese Einrastabschnitte eine hohe Temperaturbeständigkeit sowie ein besseres Reibungsverhalten. Das heißt, dass durch Verwendung derartiger Einrastabschnitte die Reibung mit beispielsweise der Gleitbahn niedrig gehalten werden kann.

In diesem Zusammenhang kann vorgesehen sein, die erfindungsgemäße Hebelvorrichtung so zu verwirklichen, dass die Fase jeweils eine Fasenbreite von 1 mm bis 3 mm und einen Fasenwinkel von 15° bis 45° hat.

Weiterhin ist es vorteilhaft, die erfindungsgemäße Hebelvorrichtung derart auszubilden, dass die Einrastabschnitte mit einem Schmiermittel, insbesondere mit einem Schmierfett, versehen sind. Dadurch wird eine bessere Gleitfähigkeit der Einrastabschnitte auf der Gleitbahn erzielt, wodurch der Verschleiß der Einrastabschnitte deutlich gesenkt werden kann. Ebenso ist auch denkbar, sowohl die Gleitbahn als auch die Einrastabschnitte mit dem Schmierfett zu versehen, um den Verschleiß noch stärker zu senken und damit die Lebensdauer der Hebelvorrichtung zu erhöhen. Weiterhin wird durch diese Maßnahme ein Einrasten der Einrastzähne in die Einrastöffnung aufgrund der verbesserten Gleitfähigkeit begünstigt.

Die Erfindung wird nun mit Bezug auf die begleitenden Zeichnungen anhand eines bevorzugten Ausführungsbeispiels beispielhaft erläutert.

### Es zeigen:

- Figur 1: eine Schnittdarstellung der erfindungsgemäßen Hebelvorrichtung in einer Parkbremslösestellung gemäß einem Ausführungsbeispiel der Erfindung;
- Figur 2: eine Schnittdarstellung der erfindungsgemäßen Hebelvorrichtung von Figur 1 kurz vor Erreichen einer Parkbremsstellung;
- Figur 3: eine Schnittdarstellung der erfindungsgemäßen Hebelvorrichtung von Figur 2 in der Parkbremsstellung;
- Figur 4: eine vergrößerte Querschnittsdarstellung der erfindungsgemäßen Hebelvorrichtung von Figur 1 entlang einem Schnitt A-A; und
- Figur 5: eine Seitenansicht eines Rastierelements der erfindungsgemäßen Hebelvorrichtung.

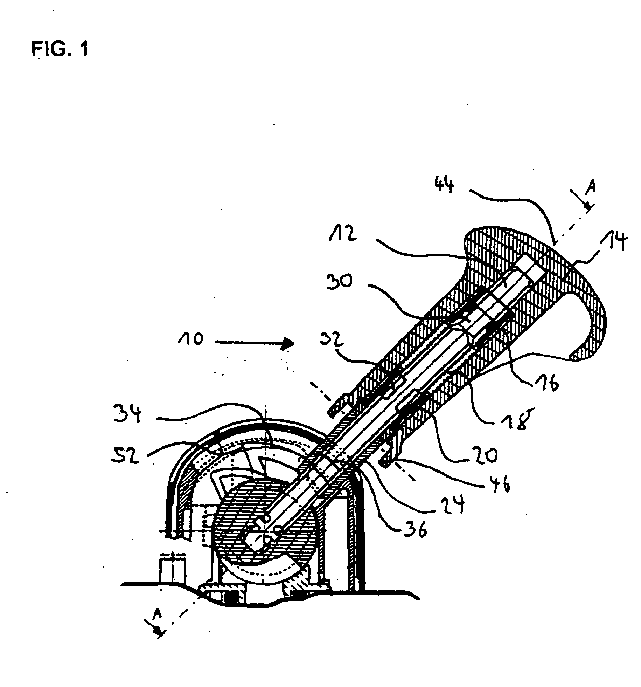

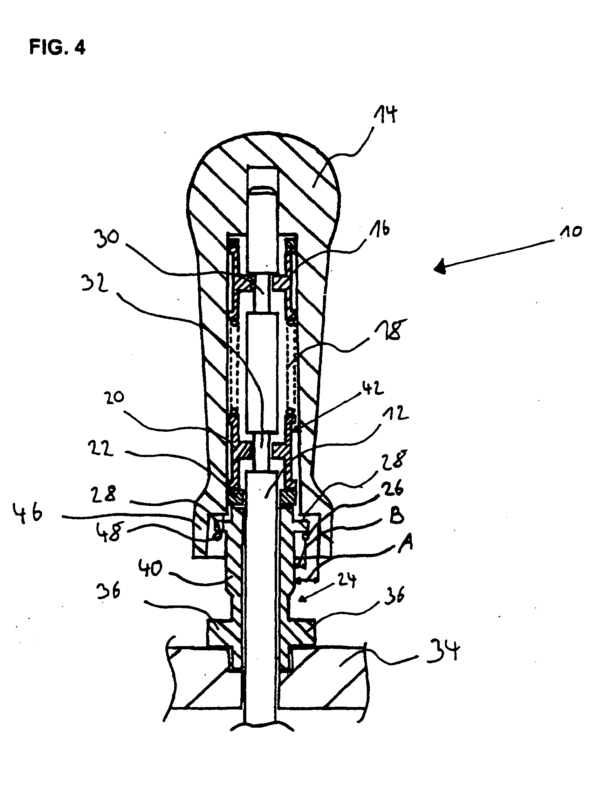

Figur 1 zeigt eine Schnittdarstellung der erfindungsgemäßen Hebelvorrichtung 10 in einer Parkbremslösestellung gemäß einem Ausführungsbeispiel der Erfindung. Darüber hinaus ist ein hier nicht näher interessierendes Handbremsventil zumindest teilweise dargestellt, das mit der Hebelvorrichtung 10 gekoppelt und darüber betätigbar ist. Zur Erläuterung des Aufbaus der erfindungsgemäßen Hebelvorrichtung 10 wird zunächst auf Figur 4 Bezug genommen. Figur 4 zeigt eine vergrößerte Querschnittsdarstellung der erfindungsgemäßen Hebelvorrichtung 10 von Figur 1 entlang einem Schnitt A-A. Wie hieraus ersichtlich ist, umfasst die Hebelvorrichtung 10 einen schwenkbaren Hebel 12, der mit dem hier nicht näher interessierenden und in Figur 4 nicht gezeigten Handbremsventil um eine Schwenkachse schwenkbar gekoppelt ist. Weiterhin ist um den Hebel 12 ein Griff 14 vorgesehen, der zur Variation einer Stellung des Hebels 12 dient. Dabei ist der Griff 14 teilweise von dem Hebel 12 in einer Axialrichtung beziehungsweise in Hebelachsrichtung des Hebels 12 bewegbar geführt, wird von dem Hebel 12 aber gleichzeitig drehfest um eine Hebelachse 44 gehalten. Darüber hinaus wird der Griff von einer Führungseinrichtung 42 in der Axialrichtung des Hebels 12 bewegbar und mit rotatorischem Freiheitsgrad um den Hebel 12 beziehungsweise die Hebelachse 44 geführt. Die Führungseinrichtung 42 weist in Figur 4 gesehen ein oberes und unteres hohlzylindrisches beziehungsweise manschettenförmiges Führungselement 16 und 20 auf. Das obere und untere hohlzylindrische Führungselement 16 und 20 weist jeweils einen radial nach innen weisenden ringförmigen Vorsprungsabschnitt auf. Die Vorsprungsabschnitte der Führungselemente 16 und 20 sind in einem in der Hebelachsrichtung bewegbar gelagert. Dabei sind der obere und untere Hebelabschnitt 30 und 32 in der Form einer um den Hebel 12 umlaufenden Nut ausgebildet. Anhand deren Breite ist das Bewegungsausmaß der Führungselemente 16 und 20 definierbar. Zwischen dem oberen und unteren Führungselement 16 und 20 ist eine der Führungseinrichtung 42 zugeordnete Feder 18 in der Form einer Schraubenfeder angeordnet. Über die Feder 18 werden das obere und untere Führungselement 16 und 20 in voneinander wegweisende Richtungen entlang der Hebelachse 44 vorgespannt. Darüber hinaus ist ein der Führungseinrichtung 42 zugeordneter Führungsring 22 an einem unteren Ende des unteren Führungselements 20 vorgesehen, der sich in Anlage mit einem Rastierelement 24 befindet, das nachstehend erläutert wird. Der Führungsring 22 ist derart ausgelegt, dass er zumindest abschnittsweise mit Abschnitten des Griffs in Berührung bringbar ist. Das Rastierelement 24 ist in Anlage mit dem Führungsring 22 um den Hebel 12 herum angeordnet und dient zur Stellungsfixierung beziehungsweise zur Verriegelung einer Stellung des Hebels 12. Ebenso wie der Griff 14 ist das Rastierelement 24 in der Axialrichtung des Hebels 12 bewegbar geführt. Das Rastierelement 24 ist näherungsweise T-förmig ausgebildet und umfasst im Wesentlichen einen hohlzylindrischen Hauptkörper 40, der in Figur 4 gesehen an dessen oberen Ende zwei sich seitlich von dem Hauptkörper 40 erstreckende Betätigungsvorsprünge 28 und an dessen unteren Ende zwei sich seitlich erstreckende Einrastabschnitte 36 aufweist. Das Rastierelement 24 wird zumindest teilweise von zu dem Rastierelement 24 in radialen Abstand A und B angeordneten, benachbarten Abschnitten 46 und 26 des Griffs 14 derart umgeben, dass sich die benachbarten Abschnitte 46 und 26 über die Betätigungsvorsprünge 28 in Hebelachsrichtung hinweg erstrecken. Die zu dem Rastierelement 24 benachbarten Abschnitte 46 und 26 werden von einem hohlzylindrischen in Figur 4 gesehen unteren Abschnitt 46 beziehungsweise Endabschnitt 46 des Griffs 14 sowie von einem innerhalb des hohlzylindrischen unteren Abschnitts 46 angeordneten Betätigungsabschnitt beziehungsweise Mitnehmerabschnitt 26 des Griffs 14 gebildet. Der hohlzylindrische Abschnitt 46 ist mit dem radialen Abstand A bezüglich dem Rastierelement 24 beabstandet. Der Betätigungsabschnitt hingegen ist mit einem radialen Abstand B bezüglich dem Rastierelement 24 beabstandet, der kleiner als der Abstand A ist. Dabei ist der Betätigungsabschnitt 26 zumindest teilweise unterhalb der Betätigungsvorsprünge 28 angeordnet. Vorzugsweise wird der Betätigungsabschnitt 26 von in den hohlzylindrischen unteren Abschnitt 46 eingeschobenen Mitnehmerstiften gebildet. Der hohlzylindrische untere Abschnitt 46 umfasst einen Anschlag 48 beziehungsweise einen Absatz 48, so dass die Betätigungsvorsprünge 28 zwischen dem Absatz 48 und dem Betätigungsabschnitt 26 des Griffs 14 angeordnet sind. Weiterhin weist das Rastierelement 24 die Einrastabschnitte 36 auf, die zumindest zwischen einer Parkbremslösestellung und kurz vor Erreichen einer Parkbremsstellung des Hebels 12 mit einer Gleitbahn 34 einer Schaltkulisse in Berührung stehen. Die Gleitbahn 34 wird dabei aus einem Randbereich eines räumlich gekrümmten Langlochs ausgebildet, wie aus den Figuren 1 bis 4 ersichtlich ist. Beispielsweise kann die Gleitbahn 34 durch die Formgebung einer Schaltkulisse gebildet werden.

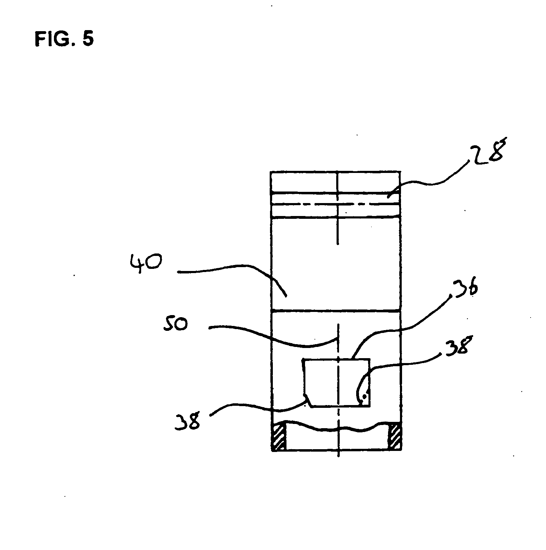

Figur 5 zeigt eine Seitenansicht (von links oder rechts in Figur 4 gesehen) des Rastierelements 24. Wie daraus ersichtlich ist, erstrecken sich die im Wesentlichen quaderförmigen Einrastabschnitte 36 von dem Hauptkörper 40 des Rastierelements 24 und sind bezüglich einer Rastierelementlängsachse 50 achsensymmetrisch ausgebildet. An den quaderförmig ausgebildeten Einrastabschnitten 36 ist jeweils eine Fase 38 vorgesehen, die jeweils an einem unteren Kantenbereich der quaderförmigen Einrastabschnitte 36 ausgebildet ist. Ebenso ist aus Figur 5 ersichtlich, dass die jeweiligen Fasen 38 der Einrastabschnitte 36 aufgrund der Achsensymmetrie bezüglich der Rastierelementlängsachse 50 zueinander versetzt sind. So ist die Fase 38 des einen, in Figur 5 vorne dargestellten Einrastabschnitts 36 in dem linken unteren Kantenbereich des quaderförmigen Einrastabschnitts 36 ausgebildet. Hingegen ist die Fase 38 (durch gestrichelte Linie dargestellt) des anderen, in Figur 5 hinten und damit verdeckten Einrastabschnitts 36 in dem rechten unteren Kantenbereich des quaderförmigen Einrastabschnitts 36 ausgebildet. Damit ergibt sich bezüglich einer Schwenkbewegungsrichtung des Hebels 12 jeweils eine vorauseilende und nachlaufende Fase 38 des entsprechenden Einrastabschnitts 36. Vorzugsweise weisen die Fasen 38 beider Einrastabschnitte 36 eine Fasenbreite im Bereich von 1 mm bis 3 mm, insbesondere 1,5 mm, und einen Fasenwinkel im Bereich von 15° bis 45°, insbesondere 30°, auf.

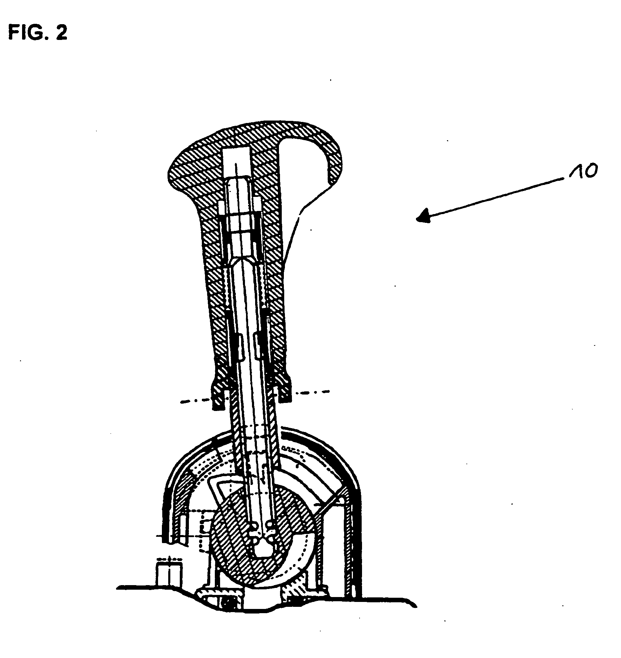

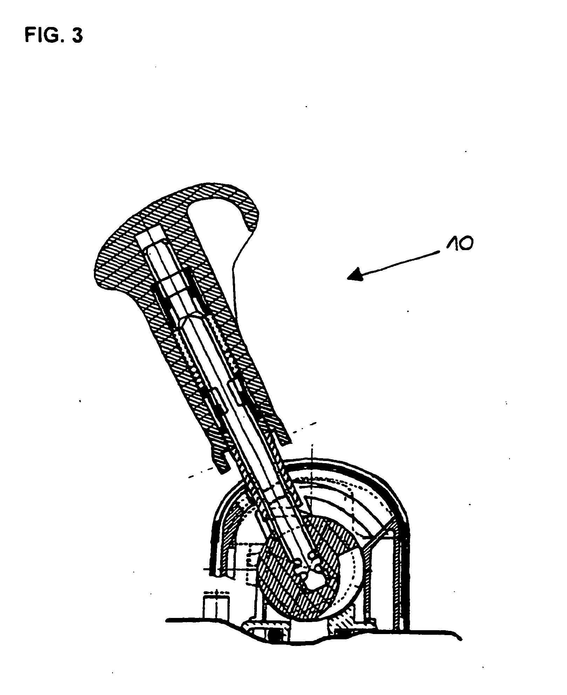

Nachstehend wird der Betrieb des erfindungsgemäßen Hebelmechanismus anhand der Figuren 1 bis 3 erläutert. Figur 1 zeigt die erfindungsgemäße Hebelvorrichtung 10 in der Parkbremslösestellung. In dieser Stellung befindet sich das Rastierelement 24 in Anlage mit der Gleitbahn 34, wobei die Führungseinrichtung 42 das Rastierelement 24 mittels deren Feder 18 in Richtung zur Gleitbahn 34 vorspannt. Wird der Hebel 12 über den Griff 14 in Richtung der Parkbremsstellung bis kurz vor Erreichen der Parkbremsstellung bewegt, so wird das untere Führungselement 20 der Führungseinrichtung 42 aufgrund des Verlaufs der Gleitbahn 34 in eine in Figur 2 oder 4 nach oben weisende Richtung entlang dem Hebel 12 bewegt und damit ebenso der Griff 14. Dabei spannt die Führungseinrichtung weiterhin das Rastierelement 24 gegen die Gleitbahn 34 vor. Während dieser Bewegung wird eine Übertragung auf das Rastierelement 24 von sämtlichen auf den Griff 14 wirkenden Drehmomentkomponenten, die nicht parallel zur Schwenkachse des Hebels 12 sind, durch den radialen Abstand A, B der zu dem Rastierelement 24 benachbarten Abschnitte 46 und 26 verhindert. Der Abstand A, B der benachbarten Abschnitte 46 und 26 ist derart gewählt, dass selbst bei verhältnismäßig starker Beanspruchung des Griffs 14, die zu einer Verformung auch der benachbarten Abschnitte des Griffs führen kann, keine Übertragung derartiger Drehmomentkomponenten auf das Rastierelement 24 stattfindet. Darüber hinaus unterbindet der zwischen dem Rastierelement 24 und dem unteren Führungselement 20 angeordnete Führungsring 22 durch dessen Auslegung zusätzlich eine Verformung der benachbarten Abschnitte 46 und 26 des Griffs 14 in Richtung des Rastierelements 24. Dadurch gelangen die benachbarten Abschnitte 46 und 26 des Griffs 14 nicht in direkte Berührung mit dem Rastierelement 24. Wird der Hebel weiter in die Parkbremsstellung wie in Figur 3 gezeigt bewegt, so rastet das Rastierelement 24 mit den Einrastabschnitten in einer Einrastöffnung 52 der Gleitbahn 34 unter der durch die Führungseinrichtung 42 aufgebrachten Vorspannung ein, wodurch der Griff 14 ebenso mit dem Rastierelement 24 bewegt wird. Die Einrastöffnung 52 wird beispielsweise durch Aufweitung des Langlochs gebildet. Anhand der an den Einrastabschnitten 36 vorgesehenen Fasen 38 können die Einrastabschnitte 36 über diese Fasen 38 in der Einrastöffnung 52 einrasten. Dadurch, dass die Fasen 38 jeweils versetzt zueinander beziehungsweise achssymmetrisch bezüglich der Rastierelementlängsachse 50 angeordnet sind, wie vorstehend beschrieben ist, wird, selbst wenn es zu einer Verdrehung des Rastierelements 24 kommen sollte, vermieden, dass lediglich einer der Einrastabschnitte 36 einrastet. Zum Aufheben der Stellungsfixierung des Hebels 12 wird eine Zugkraft auf den Griff 14 ausgeübt, d.h. eine Kraft in einer in Figur 3 nach oben weisenden Richtung. Dadurch, dass sich die Betätigungsvorsprünge 28 des Rastierelements 24 zwischen dem Betätigungsabschnitt 26 und dem Absatz 48 des Griffs 14 befinden, kann das Rastierelement 24 aus der Einrastöffnung 52 gegen die Vorspannung der Führungseinrichtung 42 aus der Raststellung herausbewegt werden.

### Bezugszeichenliste:

- 10: Hebelvorrichtung
- 12: Hebel
- 14: Griff
- 16: oberes Führungselement
- 18: Feder
- 20: unteres Führungselement
- 22: Führungsring
- 24: Rastierelement
- 26: Betätigungsabschnitt
- 28: Betätigungsvorsprung
- 30: oberer Hebelabschnitt
- 32: unterer Hebelabschnitt
- 34: Gleitbahn
- 36: Einrastabschnitt
- 38: Fase
- 40: hohlzylindrischer Hauptkörper
- 42: Führungseinrichtung
- 44: Hebelachse
- 46: unterer, hohlzylindrischer Abschnitt des Griffs
- 48: Absatz bzw. Anschlag
- 50: Rastierelementlängsachse
- 52: Einrastöffnung
- A: radialer Abstand
- B: radialer Abstand

## Patentansprüche

1. Hebelvorrichtung (10), insbesondere Hebelvorrichtung (10) für ein Handbremsventil einer Bremsanlage, mit
- einem schwenkbaren Rastierelement (24), dessen Stellung durch eine Schwenkbewegung variierbar ist und das zumindest einen Einrastabschnitt (36), vorzugsweise einen Einrastvorsprung (36), aufweist, der zum Sperren der Schwenkbewegung vorgesehen ist, und
- einer Gleitbahn (34), mit der das Rastierelement (24) zumindest abschnittweise in Berührung steht, und die eine Einrastöffnung (52) aufweist,
**dadurch gekennzeichnet, dass** an dem zumindest einen Einrastabschnitt (36) eine Fase (38) vorgesehen ist, so dass der Einrastabschnitt (36) über die Fase (38) in die Einrastöffnung (52) gleiten kann.

2. Hebelvorrichtung (10) nach Anspruch 1, **dadurch gekennzeichnet, dass** das Rastierelement (24) weiterhin einen achsensymmetrischen Hauptkörper (40) umfasst, an dem der zumindest eine Einrastabschnitt (36) in einer Quaderform vorgesehen ist.

3. Hebelvorrichtung (10) nach Anspruch 2, **dadurch gekennzeichnet, dass** das Rastierelement (24) einen weiteren Einrastabschnitt (36) mit einer Fase (38) umfasst, der an dem Hauptkörper (40) vorgesehen ist, wobei die Einrastabschnitte (36) bezüglich des Hauptkörpers (40) achsensymmetrisch ausgebildet sind und/oder deren Quaderquerachse übereinstimmt.

4. Hebelvorrichtung (10) nach Anspruch 2, **dadurch gekennzeichnet, dass** das Rastierelement (24) einen weiteren Einrastabschnitt (36) mit genau einer Fase (38) umfasst, der an dem Hauptkörper (40) vorgesehen ist, wobei die Einrastabschnitte (36) bezüglich des Hauptkörpers (40) achsensymmetrisch ausgebildet sind und/oder deren Quaderquerachse übereinstimmt.

5. Hebelvorrichtung (10) nach einem der vorangehenden Ansprüche, **dadurch gekennzeichnet, dass** zumindest die Einrastabschnitte (36) aus (Torlon^{®})-Polyamidimid, insbesondere Torlon 4301 mit Graphit, oder Polyamid 6.6 ausgebildet sind.

6. Hebelvorrichtung (10) nach einem der vorangehenden Ansprüche, **dadurch gekennzeichnet, dass** die Fase (38) jeweils eine Fasenbreite von 1 mm bis 3 mm und einen Fasenwinkel von 15° bis 45° hat.

7. Hebelvorrichtung (10) nach einem der vorangehenden Ansprüche, **dadurch gekennzeichnet, dass** die Einrastabschnitte (36) mit einem Schmiermittel, insbesondere mit einem Schmierfett, versehen sind.

## Claims

1. Lever device (10), in particular a lever device (10) for a hand-brake valve in a braking system, comprising
- a pivotable locking element (24) whose position is variable by means of a pivoting movement and which comprises at least one engaging section (36), preferably an engaging protrusion (36), that is provided for blocking the pivoting movement, and
- a sliding path (34) which said locking element (24) contacts at least in some sections and which presents an engagement opening (52),
**characterized in that** a bevelled edge (38) is provided on said at least one engaging section (36) such that said engaging section (36) can slide over said bevelled edge (38) into said engagement opening (52).

2. Lever device (10) according to Claim 1, **characterized in that** said locking element (24) comprises furthermore an axially symmetrical main body (40) on which said at least one engaging section (36) is provided in the form of a rectangular solid.

3. Lever device (10) according to Claim 2, **characterized in that** said locking element (24) comprises a further engaging section (36) with a bevelled edge (38) that is provided on said main body (40), with said engaging sections (36) having an axially symmetrical configuration relative to said main body (40) and/or with their transverse axes of the rectangular solids being congruent.

4. Lever device (10) according to Claim 2, **characterized in that** said locking element (24) comprises a further engaging section (36) with precisely one bevelled edge (38), that is provided on said main body (40), with said engaging sections (36) having an axially symmetrical configuration relative to said main body (40) and/or with their transverse axes of the rectangular solids being congruent.

5. Lever device (10) according to any of the preceding Claims, **characterized in that** at least said engaging sections (36) being made of (Torlon^{®}) polyamide imide, in particular Torlon 4301 with graphite, or polyamide 6.6.

6. Lever device (10) according to any of the preceding Claims, **characterized in that** said bevelled edge (38) has a bevel width of 1 mm to 3 mm and a bevel angle of 15° to 45°.

7. Lever device (10) according to any of the preceding Claims, **characterized in that** said engaging sections (36) are provided with a lubricant, in particular a lubricating grease.

## Revendications

1. Dispositif à levier (10), en particulier un dispositif à levier (10) pour une soupape de frein à main dans un système de freinage, comprenant
- un élément d'enclenchement (24) pivotable, dont la position est variable moyennant un mouvement pivotant et qui comprend au moins une partie de prise (36), de préférence une saillie d'enclenchement (36), qui est formée pour le blocage du mouvement pivotant, et
- une voie de glissement (34), avec laquelle ledit élément d'enclenchement (24) se trouve en contact au moins dans des parties définies et qui présente une ouverture de prise (52),
**caractérisé en ce qu'**un chanfrein (38) est pourvu à au moins une partie de prise (36) d'une telle façon, que ladite partie de prise (36) puisse glisser sur ledit chanfrein (38) dans ladite ouverture de prise (52).

2. Dispositif à levier (10) selon la revendication 1, **caractérisé en ce que** ledit élément d'enclenchement (24) comprend au plus un corps principal (40) en symétrie axiale, auquel est pourvu ladite moins une partie de prise (36) sous forme d'un parallélépipède.

3. Dispositif à levier (10) selon la revendication 2, **caractérisé en ce que** ledit élément d'enclenchement (24) comprend une partie de prise supplémentaire (36) à un chanfrein (38), qui est formé audit corps principal (40), auxdites parties de prise (36) ayant une configuration en symétrie axiale relative audit corps principal (40) et/ou à leurs axes desdits parallélépipèdes étant congruents.

4. Dispositif à levier (10) selon la revendication 2, **caractérisé en ce que** ledit élément d'enclenchement (24) comprend a partie de prise supplémentaire (36) à précisément un seul chanfrein (38), qui est formé audit corps principal (40), auxdites parties de prise (36) ayant une configuration en symétrie axiale relative audit corps principal (40) et/ou à leurs axes desdits parallélépipèdes étant congruents.

5. Dispositif à levier (10) selon une quelconque des revendications précédentes, **caractérisé en ce qu'**au moins lesdites parties de prise (36) sont faites en (Torlon^{®}) polyamide imide, en particulier Torlon 4301 avec du graphite, ou en polyamide 6.6.

6. Dispositif à levier (10) selon une quelconque des revendications précédentes, **caractérisé en ce que** ledit chanfrein (38) a une largeur de chanfrein de 1 mm à 3 mm et un angle de chanfrein de 15° à 45°.

7. Dispositif à levier (10) selon une quelconque des revendications précédentes, **caractérisé en ce que** lesdites parties de prise (36) sont pourvues d'un lubrifiant, en particulier d'une graisse lubrifiante.
